Europäisches Patentamt

**European Patent Office**

**Office européen des brevets**

(19)

(11) Numéro de publication: **0 034 690**
**A1**

# DEMANDE DE BREVET EUROPEEN

(12)

(21) Numéro de dépôt: **80870012.4**

(22) Date de dépôt: **20.02.80**

(51) Int. Cl.³: **C 04 B 7/14**
**C 04 B 7/44**

(43) Date de publication de la demande:
**02.09.81 Bulletin 81/35**

(84) Etats contractants désignés:
**AT BE CH DE FR GB IT LU NL SE**

(71) Demandeur: **CIMENTS D'OBOURG, Société Anonyme**
**2, rue des Fabriques**
**B-7048 Obourg(BE)**

(72) Inventeur: **Martin, Henri**
**Rue St-Denis, 150**
**B-7048 Mons (Obourg)(BE)**

(74) Mandataire: **Kuborn, Jacques et al,**
**Office Hanssens S.P.R.L. Square Marie-Louise, 40 (bte 19)**
**B-1040 Bruxelles(BE)**

(54) **Procédé de valorisation de scories d'aciérie lors de la fabrication du clinker de ciment Portland en voie humide.**

(57) Dans un procédé de fabrication du clinker de ciment Portland en voie humide, on fait usage de scories Linz-Donawitz en tant que matières d'apport de fer et de constituants préformés du clinker.

On introduit dans la zone de séchage du four une pâte substantiellement déficitaire en matières d'ajout ferrugineuses, on introduit dans le four, par la tuyère, une quantité voulue de scories Linz-Donawitz broyées, pour combler le déficit de la pâte, et on incorpore ces scories à la pâte calcinée dans la zone de cuisson du four.

EP 0 034 690 A1

0034690

1.

La présente invention a pour objet un procédé de valorisation de scories d'aciérie, et notamment de scories obtenues par le procédé Linz-Donawitz, permettant de réaliser des économies de consommation calorifique des fours lors de la fabrication du clinker de ciment Portland en voie humide.

Les scories d'aciéries LD dont la composition est reprise dans le tableau I, présentent une teneur importante en fer. Malheureusement, leur réutilisation comme apport de fer au haut fourneau est limitée en raison de leur teneur en phosphore et en métaux alcalins.

TABLEAU I.

| Composition chimique de scories LD (% en poids) | | Composition minéralogique de scories LD (% en poids) | |
|---|---|---|---|
| CaO | : 40 – 55 % | $2\ CaO.SiO_2$ | : 35 – 40 % |
| Fe total | : 13 – 26 | $2\ CaO.Fe_2O_3$ | : 25 – 30 |
| $SiO_2$ | : 7 – 16 | Wüstite | : 20 – 25 |
| MgO | : 1 – 5 | Fer métal | : 0 – 2 |
| MnO | : 4 – 7 | $Ca(Fe,Mn)O$ | : 5 – 15 |
| $Al_2O_3$ | : 0,5 – 2 | $Ca(OH)_2$ | : 0 – 5 |
| $P_2O_5$ | : 1 – 2,5 | $CaCO_3$ | : 0 – 2 |
| S | : 0,1 – 0,2 | | |

De nombreux efforts ont été faits ces dernières années pour trouver une utilisation intéressante à l'excédent de scories LD.

La récupération du fer qu'elles contiennent n'est sur le plan métallurgique pas possible sans traitements coûteux. C'est pourquoi diverses solutions ont déjà été préconisées pour transformer ces scories, à l'instar du laitier de haut fourneau, en matières présentant des propriétés hydrauliques similaires à celles du ciment.

Dans cette optique, divers brevets belges, déposés au nom du Centre de Recherches Métallurgiques - Centrum voor Research in de Metallurgie, préconisent des traitements de la scorie à l'état liquide (N°s 830.140 - 839.753 - 839.898 - 848.077 - 856.711) ou à l'état solide, en la broyant et/ou en la mélangeant avec d'autres matières (N°s 833.243-838.469 839.899), en vue de lui conférer des propriétés hydrauliques.

Il a également déjà été proposé dans le brevet belge 690.244 au nom de la société Mannesmann Aktiengesellschaft de réaliser un clinker d'un ciment spécial, résistant aux eaux sulfatées, en mélangeant du laitier d'aciérie avec de l'alumine et de la chaux ou du calcaire, et en soumettant le mélange à un frittage oxydant en vue d'obtenir un clinker de ciment exempt d'aluminate calcique. Ce brevet est toutefois muet sur la manière dont le frittage est réalisé, et dès lors, il est nécessairement fait usage d'un procédé conventionnel de fabrication de ciment, soit un procédé en voie sèche, soit un procédé en voie humide.

Ces propositions n'ont pas été suivies d'effet et les seules utilisations actuellement connues des scories LD sont l'amendement calcaire, ou la construction de digues et de couches de fondations routières.

Force est de constater que ces utilisations exploitent très partiellement les possibilités de valorisation de la scorie LD et présentent même dans le second cas un risque en raison de teneurs en chaux hydratable qui peuvent être importantes.

Néanmoins, les scories LD demeurent en grande partie inutilisées et leur mise au terril entraîne en pure perte des frais de manutention relativement importants, ainsi que la perte d'une source bon marché de fer.

A la connaissance de la demanderesse, il n'a jusqu'à présent pas été fait usage, ni été proposé de faire usage, de scories Linz-Donawitz comme matières premières pour l'apport du fer dans la réalisation de clinker de ciment Portland. Or, le ciment Portland est actuellement le ciment le plus couramment utilisé, et les divers types de ciment Portland sont obtenus à partir d'un clinker de composition donnée au tableau II ci-après :

3.

TABLEAU II.

Composition du clinker
de ciment Portland
(% en poids)

| | | |
|---|---|---|
| CaO | : | 64 – 67 |
| $SiO_2$ | : | 19,5 – 21 |
| $Al2O_3$ | : | 5 – 7 |
| $Fe_2O_3$ | : | 3 – 4 |
| MgO | : | 0,5 – 1,5 |
| MnO | : | 0,05 – 0,4 |
| S | : | 0,3 – 0,5 |
| $P_2O_5$ | : | 0,2 – 0,4 |
| Na | : | 0,2 – 0,3 |
| K | : | 0,7 – 1 |

ces divers éléments se retrouvant combinés principalement dans les formes suivantes :

Silicate tricalcique : 50 – 70 %
Silicate bicalcique : 5 – 25 %
Aluminate tricalcique : 4 – 9 %
Aluminoferrite tétracalcique 8 – 14 %

et, éventuellement, de faibles quantités d'alcali-aluminates.

L'usage de scories Linz-Donawitz dans la réalisation de clinker de ciment Portland permettrait l'utilisation d'une source de fer importante et peu coûteuse, et permettrait en outre une réduction non négligeable de la consommation calorifique des fours.

En effet, les fours de cimenterie fonctionnant en voie humide comportent trois zones : une zone de séchage à l'entrée du four, une zone de décarbonatation et enfin une zone de cuisson à la sortie du four. Or, les scories Linz-Donawitz ont une teneur importante en :

- $2CaO.SiO_2$ silicate bicalcique qui, ainsi qu'on le voit au tableau II ci-avant, est un des constituants du clinker ou un produit étape intermédiaire de son constituant principal, le silicate tricalcique

- 2CaO.Fe$_2$O$_3$, étape intermédiaire de l'aluminoferrite tétracalcique

et contiennent également de la chaux non carbonatée.

Cet apport permet un gain calorifique lors de la formation du clinker.

Dès lors, la température du four peut être réduite dans les zones de décarbonatation et de cuisson, et l'allure thermique générale du four peut être abaissée.

La demanderesse a, en outre, constaté de manière surprenante que lorsque les scories Linz-Donawitz sont finement broyées et introduites dans le four par la tuyère, la quasi totalité des scories introduites est incorporée à la pâte calcinée dans la zone de cuisson, sans qu'une quantité significative de scories broyées soit entraînée dans les gaz d'échappement du four.

Dans les procédés classiques de réalisation d'un clinker de ciment Portland en voie humide, les diverses matières d'ajout, et notamment les matières apportant le fer complémentaire, sont incorporées à la pâte par délayage, préalablement à l'introduction de la pâte dans le four. Afin de réduire la consommation calorifique du four, la demanderesse a déjà proposé dans sa demande de brevet européen 79870024.1, d'introduire les diverses matières d'ajout, et notamment le fer sous forme de pyrite ou sous toute autre forme, en formant des granules à humidité contrôlée, et en injectant ces granules dans le courant de pâte à l'entrée du four.

D'autre part, il est connu de réintroduire dans le four, par la tuyère, les poussières récupérées dans les gaz d'échappement du four. Toutefois, une partie non négligeable de ces poussières n'est pas incorporée à la pâte, et est à nouveau entraînée dans les gaz d'échappement. Etant donné que les poussières entraînées par les gaz d'échappement ont une composition très généralement similaire à celle de la pâte circulant dans le four, l'incorporation seulement partielle à la pâte des poussières de récupération n'entraîne pas de modification de la composition du clinker à la sortie du four. Tel n'est pas le cas pour les matières d'ajout telles le fer, qui sont un des constituants de la pâte, et qui doivent pouvoir être ajoutées à celle-ci de manière fiable dans des proportions déterminées.

Comme dit ci-dessus, les essais effectués par la demanderesse ont permis de constater de manière surprenante que la quasi totalité des scories Linz-Donawitz broyées, introduites dans le four par la tuyère, sont incorporées à la pâte dans la zone de cuisson. Cette différence de comportement des scories par rapport aux poussières de récupération est attribuée au fait que les scories, au contraire des poussières de récupération, sont fusibles à la température de la zone de cuisson et y sont dès lors facilement absorbées par la pâte.

Suivant ce mode d'introduction, des économies de combustible sont également réalisées au niveau de la zone de séchage, puisque le fer sous forme de scories Linz-Donawitz, ainsi que le silicate bicalcique, sont introduits à l'état sec, et que l'on économise ainsi la chaleur nécessaire au séchage des matières d'ajout apportant le fer, ainsi que d'une partie de la chaux. Bien entendu, la pâte introduite à l'entrée du four sera déficitaire de manière correspondante en ces matières.

En général, suivant la composition des scories Linz-Donawitz et des matières premières utilisées, on peut considérer qu'il sera nécessaire d'ajouter à la pâte de 100 à 150 kg de scories par tonne de clinker produite. Lors de l'introduction des scories par la tuyère, on veillera cependant à ce que la quantité de combustible utilisée soit suffisante pour maintenir, compte tenu de la présence des scories, la flamme à une température d'au moins 1.700°C.

L'introduction par la tuyère, dans un four fonctionnant en voie humide, de constituants préformés de clinker et de fer, sous forme de scories Linz-Donawitz finement broyées, et leur incorporation à la pâte calcinée dans la zone de cuisson du four, permet de réduire de quelques pour cent la consommation calorifique du four, par les économies que ce mode opératoire permet de réaliser tant dans la zone de séchage du four que dans les zones de décarbonatation et de cuisson.

Eventuellement, pour autant que la température de la flamme et les conditions économiques d'approvisionnement en laitier de haut fourneau le permettent, on pourrait envisager de broyer ensemble la quantité voulue de scories Linz-Donawitz et un excédent de laitier de haut fourneau, pour introduire dans le four, par la tuyère, un complément de silicate bicalcique, et ainsi réaliser des économies supplémentaires sur la consommation calorifique de la zone de séchage et de la zone de décarbonatation.

L'invention a été décrite à simple titre d'exemple, et il va de soi que de nombreuses modifications peuvent être apportées à sa réalisation sans s'écarter de son esprit.

1.

REVENDICATIONS.

1. Procédé de valorisation de scories d'aciérie lors de la fabrication du clinker de ciment Portland en voie humide, caractérisé en ce que l'on broie finement des scories Linz-Donawitz, on introduit dans la zone de sèchage du four une pâte substantiellement déficitaire en matières d'ajout ferrugineuses, on introduit dans le four, par la tuyère, une quantité voulue de scories Linz-Donawitz broyées pour combler le déficit de la pâte et on incorpore ces scories à la pâte calcinée dans la zone de cuisson du four.

2. Procédé suivant 1, caractérisé en ce que l'on broie simultanément avec des scories Linz-Donawitz du laitier de haut-fourneau pour enrichir la teneur de la matière broyée introduite dans le four en silicate bicalcique.

3. Procédé suivant l'une quelconque des revendications 1 ou 2, caractérisé en ce que l'on règle la quantité de combustible et de matière broyée introduite dans le four par la tuyère pour que la température de la flamme ne soit pas inférieure à 1.700°C.

0034690

## DOCUMENTS CONSIDERES COMME PERTINENTS

| Catégorie | Citation du document avec indication, en cas de besoin, des parties pertinentes | Revendication concernée |
|---|---|---|
| | DE − C − 716 909 (EERSTE NEDERLANDSCHE CEMENT INDUSTRIE) <br> * revendications 1, 3; page 2, lignes 1 à 8 * <br> −− | 1 |
| | AU − B − 48312/68 (DUNDEE CEMENT CO.) <br> * revendications * <br> −− | 1 |
| A | DE − B − 1 068 606 (PORTLAND−ZEMENT−WERKE HEIDELBERG) <br> −− | |
| A | FR − A − 2 182 810 (EERSTE NEDERLANDSE CEMENT INDUSTRIE et al.) <br> −− | |
| A | SOVIET INVENTIONS ILLUSTRATED, Week B 37, 24 Octobre 1979, section L02 <br> & SU − A − 637354 <br> −− | |
| A | BE − A − 690 244 (MANNESMANN AG) <br> −−−− | |

**CLASSEMENT DE LA DEMANDE (Int. Cl.³)**

C 04 B 7/14
C 04 B 7/44

**DOMAINES TECHNIQUES RECHERCHES (Int. Cl.³)**

C 04 B 7/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

| | | |
|---|---|---|
| X | Le présent rapport de recherche a été établi pour toutes les revendications | |
| Lieu de la recherche <br> Berlin | Date d'achèvement de la recherche <br> 23-10-1980 | Examinateur <br> HÖRNER |

OEB Form 1503.1  06.78